# EUROPEAN PATENT APPLICATION

(11) **EP 0 552 777 A1**
(43) Date of publication of application: **28.07.1993**
(21) Application number: 93100917.9
(22) Date of filing: 21.01.1993
(51) Int. Cl.: A61C 15/04

(54) **Interdental cleaning device**

(30) Priority: 24.01.1992 IT BO920011 U
(71) Applicant: MAUSIN S.r.l., I-57025 Piombino (IT)
(72) Inventor: Pocaterra, Daniele, I-44100 Ferrara (IT)
(74) Representative: Jorio, Paolo

(57) **Abstract**

A device (1) comprising a fixture having a handgrip (4) and two arms (7); characterized by the fact that it comprises a portion of thread (3); means (15) integral with the ends of the thread; and a system for clamping the aforementioned means (15) to the free ends of the arms (7).

## Description

The present invention relates to an interdental cleaning device.

Interdental cleaning is normally effected using a thread wound about a spool housed inside a special box. In actual use, a length of the thread is unwound off the spool, is cut off using a cutting edge on the box, and, gripped tightly in both hands at either end, is inserted between the teeth and, still held taut, is moved back and forth for removing any sediment accumulated in the interdental spaces. Clearly, in addition to being complicated, such an operation can only be performed on the central portion of the dental arch. For this reason, interdental cleaning devices are now marketed comprising a fixture defined by a handgrip and fork. In this case, a very long portion of thread is wound at one end on to a spool fitted to the handgrip, is threaded through openings formed on the ends of the two arms of the fork, and is again wound at the other end on to the spool on the handgrip. In actual use, the fork is inserted into the mouth, the portion of thread between the arms of the fork is inserted between the teeth, and the fixture is moved back and forth for cleaning the interdental space.

Though an improvement as compared with the handheld thread system, by virtue of the thread being maneuverable externally, the above device presents several drawbacks, such as difficulty in assembling the thread on to the fixture; high thread consumption; continual cleaning of the fixture along the entire path of the thread; and the fact that the thread is nevertheless fed off a spool on to which dust or foreign bodies may be deposited. Indeed, apart from the assembly problems involved, the above device also presents shortcomings in terms of hygiene, by virtue of the thread nevertheless coming into contact with the inside of the mouth and, if not perfectly sterile, possibly constituting a vehicle for bacteria. From the functional standpoint, the main drawback of the above device is the impossibility, when assembled as described above, of ensuring the portion of thread between the arms of the fork is maintained sufficiently taut. For ensuring thorough cleaning, i.e. sediment removal, of the interdental space, in fact, it is essential that the thread be and remain as taut as possible throughout the entire cleaning operation. Last but not least, troublefree grip of the fixture is impeded by the spool fitted to the handgrip.

It is an object of the present invention to provide an interdental cleaning device designed to overcome the aforementioned drawbacks.

According to the present invention, there is provided an interdental cleaning device comprising a fixture having a handgrip and two arms; characterized by the fact that it comprises a portion of thread; means integral with the ends of said portion of thread; and a system for clamping said means to the free ends of said arms.

A preferred, non-limiting embodiment of the present invention will be described by way of example with reference to the accompanying drawings, in which:

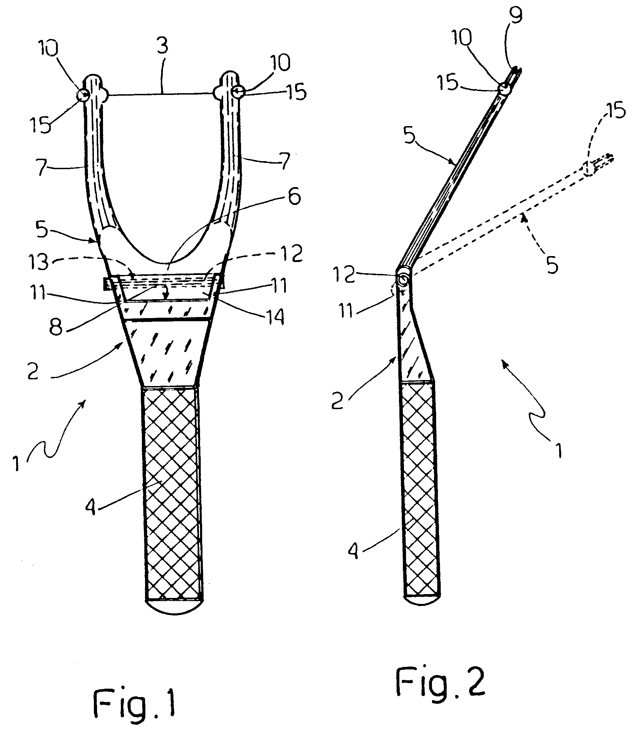

Fig.1 shows a front view of an interdental cleaning device in accordance with the teachings of the present invention;
Fig.2 shows a side view of the Fig.1 device.

Number 1 in Fig.s 1 and 2 indicates an interdental cleaning device comprising a fixture 2, and a portion of thread 3 fitted to and maintained constantly taut by fixture 2. Fixture 2 comprises a grip 4, and a fork-shaped body 5 fitted to grip 4 and in turn comprising a central portion 6 from the axial ends of which extend respective arms 7. The portions of arms 7 connected to portion 6 are slightly curved, whereas, the free-end portions of arms 7 are straight and, in particular, parallel to each other. At the free end, each arm 7 presents an axial slot 9 open at the top, and the bottom of which presents a semispherical recess 10 on the opposite face of arm 7 to that facing the other arm 7. Fork-shaped body 5 is made of plastic material, or any other material providing it is such as to define elastically-deformable arms 7.

With reference to Fig.s 1 and 2, fixture 2 may be provided, between grip 4 and fork-shaped body 5, with an articulated joint for adjusting the angle of body 5 in relation to grip 4, and so enabling troublefree in-service maneuvering of fixture 2. Fig.s 1 and 2 show one possible embodiment of such an articulated joint, wherein a recess 8 is formed at one axial end of grip 4, so as to define two arms 11 on either side of recess 8. Between arms 11, a pin 12 is fitted through a hole 13 formed through an appendix 14 extending from the opposite side of central portion 6 as compared with arms 7. Recess 8 presents a contour in the form of an isosceles trapezium, and is engaged by appendix 14, which, in the solution shown, also presents a contour in the form of an isosceles trapezium, complementary to that of recess 8, and is so sized that certain sides contact the corresponding inner faces of recess 8. As such, a small amount of pressure, sufficient for overcoming the friction between appendix 14 and recess 8, is required for adjusting the angle of body 5, thus ensuring the set angle of body 5 is maintained during the cleaning operation. The articulated joint as described above may, of course, be fitted with a mechanism for clicking body 5 to the required angle.

With reference to Fig.s 1 and 2, each end of thread 3 is embedded inside a respective ball 15, and, in actual use, arms 7 are flexed towards each other, and thread 3 inserted inside slots 9 so that balls 15 engage respective recesses 10. The length of thread 3 is slightly shorter than the distance between arms 7, so that thread 3 remains taut. Conveniently, threads 3 complete with balls 15 may be sold in individual sealed sachets, which may also conveniently contain respective threads 3 of different diameters for catering to different interdental space widths.

The advantages of the present invention will be clear from the foregoing description.

Firstly, the device according to the present invention provides for troublefree assembly of thread 3, while at the same time ensuring the thread is maintained taut. Secondly, fixture 2 provides for adjusting the angle of fork-shaped body 5 in relation to grip 4, thus enabling troublefree maneuvering of device 1 for more thorough cleaning. Thirdly, device 1 enables the use of predetermined lengths of thread 3, thus reducing thread consumption and enabling packaging of the thread in sealed, i.e. hygienic, sachets. Finally, device 1 is straightforward in design, thus enabling low-cost mass production.

To those skilled in the art it will be clear that changes may be made to device 1 as described and illustrated herein without, however, departing from the scope of the present invention.

For example, balls 15 may be replaced by bodies of other shapes, e.g. cones, pyramids, cylinders, etc., by appropriately adapting the shape of recesses 10 in which said bodies are housed; in place of balls 15, each end of thread 3 may be made integral with a respective cap for capping the free ends of arms 7; fixture 2 may be provided with a system for adjusting the distance between arms 7 and consequently the tension of thread 3; fixture 2 may be provided with a system for adjusting the connecting point between grip 4 and fork-shaped body 5 along the whole or large part of the length of body 5; and, finally, various materials may be used for forming fixture 2 and balls 15.

## Claims

1. An interdental cleaning device comprising a fixture having a handgrip (4) and two arms (7); characterized by the fact that it comprises a portion of thread (3); means (15) integral with the ends of said portion of thread; and a system for clamping said means (15) to the free ends of said arms (7).

2. A device as claimed in Claim 1, characterized by the fact that said arms (7) are elastically deformable; and that the length of said portion of thread is less than the distance between said arms (7), so as to achieve a predetermined tension of said thread (3).

3. A device as claimed in Claim 2, characterized by the fact that said means comprise two bodies (15), each integral with a respective end of said portion of thread; and that said system comprises a slot (9) formed on the free end of each said arm (7) and in which said thread (3) is inserted, and a seat (10) for housing a respective said body (15) and formed on each said arm (7), on the face of said arm (7) opposite that facing the other said arm (7).

4. A device as claimed in Claim 3, characterized by the fact that said bodies (15) may be spherical, conical, pyramidal or cylindrical; said seat (10) presenting the same shape as said body (15).

5. A device as claimed in Claim 2, characterized by the fact that said means comprise two caps, each integral with a respective end of said portion of thread; and that said system provides for fitting said caps on to the free ends of said arms (7).

6. A device as claimed in any one of the foregoing Claims, characterized by the fact that said fixture (2) comprises said handgrip (4), and a fork-shaped element (5) presenting a central portion (6) and said arms (7).

7. A device as claimed in Claim 6, characterized by the fact that said fixture (2) comprises an articulated joint between said handgrip (4) and said fork-shaped element (5), for adjusting the angle of said fork-shaped element (5) in relation to said handgrip (4).

8. A device as claimed in Claim 6, characterized by the fact that said fixture (2) presents means for adjusting the connecting point between said handgrip (4) and said fork-shaped element (5) along the length of said fork-shaped element (5).

9. A device as claimed in Claim 6, characterized by the fact that said fixture (2) presents means for adjusting the distance between said arms (7) and so adjusting the tension of said thread (3).
